# EUROPEAN PATENT APPLICATION

(11) **EP 4 686 997 A1**
(43) Date of publication of application: **04.02.2026**
(21) Application number: 25191257.2
(22) Date of filing: 23.07.2025
(51) Int. Cl.: G05B 23/02

(54) **METHOD AND SYSTEM FOR MONITORING ASSETS**

(30) Priority: 29.07.2024 GB 202411077
(71) Applicant: Siemens Aktiengesellschaft, 80333 München (DE)
(72) Inventor: Perez Diaz, Alvaro, 28760 Tres Cantos (ES); Loach, James, Southampton, SO16 7NS (GB); Middleton, Lee, Southampton, SO16 7NS (GB); Toutoungi, Danielle, Southampton, SO16 7NS (GB)
(74) Representative: Siemens Patent Attorneys

(57) **Abstract**

Methods for identifying data anomalies in data obtained by a condition monitoring system from an industrial asset are described. The condition monitoring system monitors a plurality of data streams associated with the industrial asset and stores metadata that identifies functional dependencies between the data streams. The method generates a model of the dependency between data obtained from a first data stream and data obtained from a subset of the data streams and applies the model to generate a further time series. The further time series is used to identify anomalies.

## Description

### TECHNICAL FIELD

The present disclosure relates to methods and systems for condition monitoring and, in particular, for identifying data anomalies in data obtained from an industrial asset.

### BACKGROUND

In manufacturing industries, reducing downtime and pre-empting machine failures is key to ensuring operational efficiency and reducing costs. Condition monitoring systems monitor assets and alert operators and users to unexpected behaviour. A condition monitoring system will often monitor multiple data streams for each asset. Data obtained from different data streams may be correlated. For example, in a manufacturing plant the vibration level of a conveyor belt on a production line may be monitored using a vibrational sensor. The vibration level is correlated with the line speed of the conveyor belt: increasing or decreasing the line speed has a corresponding impact on the vibration level. In order to differentiate anomalous changes in the vibration level from expected changes due to variation in the line speed, the correlation between line speed and vibration level needs to be taken into account by the condition monitoring system.

Data obtained from monitored data streams may represent a continuously changing variable such as vibration level or temperature, or a discrete variable such as part type or program. In the continuous setting, multivariate analysis tools may be used to analyse and interpret data from multiple variables simultaneously. In the context of condition monitoring, this type of analysis helps in understanding relationships between time series data obtained from different sources such as the relationship between line speed and vibration.

However, while multivariate analysis may be a powerful tool in some instances, it also suffers from several drawbacks. Firstly, as the number of time series grows the model becomes increasingly unstable, yielding a greater number of false positives. Secondly, the higher dimensional input space makes the result difficult to interpret and visualise. This can make such systems unsuitable for less sophisticated users. Thirdly, different multivariate algorithms are generally needed to detect different kinds of multivariate behaviour: short-term phenomena such as point anomalies, and longer-term phenomena, such as trends. This further increases the complexity of the system. Fourthly, in multivariate analysis it may be difficult or impossible to distinguish unusual changes in machine response with respect to operational parameters, from unusual changes in those operational parameters themselves. For example, it may be difficult to differentiate between unusual changes in vibration with respect to line speed, rather than unusual changes in the line speed.

In the discrete setting, data may be partitioned into subsets based on the value of the discrete parameter. Analyses may be run separately on each portion of the data. While this approach may work in principle, it is not optimal. Firstly partitioning data also partitions information and makes it difficult to take a holistic view on what is happening. For example, in the case of a parameter value which rarely occurs, gradual machine degradation can look like repeated step changes in condition. It can also take a long time to acquire enough data to run data analytics algorithms. Similarly, it can be difficult for an analytics system to understand discrete changes that occur at irregular intervals. It is also difficult to combine results from different data partitions to give a user a coherent picture.

Given the drawbacks of existing approaches, there is a need for improved condition monitoring and data analysis techniques for monitoring assets to identify anomalous behaviours.

### SUMMARY

According to a first aspect of the invention a computer-implemented method for identifying data anomalies in data obtained by a condition monitoring system from an industrial asset is provided. The condition monitoring system monitors a plurality of data streams associated with the industrial asset. Each data stream represents a condition of the asset and the condition monitoring system stores metadata associated with the plurality of data streams, that identifies functional dependencies between the data streams. The method comprises: obtaining a first time series of data values from a first data stream in the plurality of data streams over a specified time period; identifying a functional dependency between the first data stream and a subset of the plurality of data streams, based on the stored metadata; generating a model of the dependency between the first time series and time series data from the subset of data streams over the specified time period; generating a second time series of data values for the first data stream based on the model and the first time series; and identifying anomalous data values from the second time series.

Preferably each data stream in the subset of data streams represents a continuous parameter.

Preferably the model comprises a machine learning regression model. Preferably the regression model is a Gaussian Process.

Preferably generating the second time series comprises, for each data value of the first time series: determining a distance between the data value and the model; and offsetting the distance by a constant value to coincide with the first time series.

Preferably identifying the anomalous data values comprises identifying anomalous data values using one or more anomaly detection methods applied to the second time series.

Preferably, when the subset comprises one or more data streams representing continuous parameters and a data stream representing a discrete parameter, generating the model comprises: partitioning the first time series and the time series data for the one or more data streams representing continuous parameters, based on the values of the discrete parameter over the specified time period; and generating a model for each value of the discrete parameter, based on the partitioning.

Preferably, generating the second time series for the first data stream comprises: determining, for each regression model, an initial time series based on distances between values of the first time series and the model; normalising a noise level with the initial time series; determining a weighted average of the normalised initial time series; and obtaining the second time series for the first data stream by offsetting the weighted average time series by a constant value to coincide with the first time series.

Preferably normalising the noise level comprises: estimating the noise level using a Bayesian model; and normalising the noise level based on the estimated noise level.

Preferably the condition is an operational condition or an environmental condition of the asset.

According to a second aspect, a computer implemented method for identifying data anomalies in data obtained by a condition monitoring system from an industrial asset is provided. The condition monitoring system monitors a plurality of data streams associated with the industrial asset. Each data stream represents a condition of the asset and the condition monitoring system stores metadata associated with the plurality of data streams that identifies functional dependencies between the data streams. The method comprises obtaining time series data from a first data stream in the plurality of data streams over a specified time period; identifying a functional dependency between the first data stream and a second data stream in the plurality of data streams, based on the stored metadata, wherein the second data stream represents a discrete parameter; determining a set of normalised time series from the time series data, the set comprising a normalised time series for each value of the discrete parameter over the specified time period; determining a weighted average time series for the first data stream, based on the set of normalised time series; and identifying anomalous data values from the weighted average time series.

Preferably determining the set of normalised time series comprises: obtaining, from the time series data for the first data stream, a time series of data values for each value of the discrete parameter; and for each obtained time series: determining a value comprising a measure of central tendency for the time series; subtracting the value from the time series to obtain a normalised time series.

These and other aspects of the invention will be apparent from the embodiment(s) described below.

### BRIEF DESCRIPTION OF THE DRAWINGS

For a more complete understanding of the present disclosure, and the advantages thereof, reference is now made to the following descriptions taken in conjunction with the accompanying drawings, in which:
Figures I is a schematic diagram of an apparatus on which embodiments of the invention may be implemented, according to an example.
Figure 2 is a block diagram of a method for identifying anomalies, according to an example.
Figure 3 illustrates a graph of time series data for a pair of data streams, according to an example.
Figure 4 is a scatter plot of data obtained from an asset, according to an example.
Figure 5 illustrates a graph of time series data, according to an example.
Figure 6 is a scatter plot of data obtained from an asset, according to an example.
Figure 7 is a block diagram of a method for identifying anomalies, according to an example.
Figure 8 illustrates a graph of time series data, according to an example.
Figure 9 illustrates a graph of time series data, according to an example.
Figure 10 is a block diagram of a method for identifying anomalies, according to an example.
Figure I I illustrates a graph of time series data, according to an example.
Figure 12 is a scatter plot of data obtained from an asset, according to an example.
Figure 13 illustrates graphs of time series data, according to an example.
Figure 14 is a block diagram of a method for identifying anomalies, according to an example.
Figure 15 illustrates graphs of time series data, according to an example.
Figure 16 illustrates graphs of time series data, according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms including technical and scientific terms used herein are to be interpreted as is customary in the art. It will be further understood that terms in common usage should also be interpreted as is customary in the relevant art and not in an idealized or overly formal sense unless expressly so defined herein.

Figure I is a diagram showing an example of a condition monitoring system 100 on which the methods described may be implemented. Figure I depicts a collection of assets I 10. The assets in the collection of assets 110 may include different kinds of industrial asset as used in various industries including, but not limited to: machine tools such as lathes, milling tools, drilling tools; industrial robots such as welding robots, inspection robots, testing and validation robots; production line equipment such as belt conveyers, roller conveyers, packaging machines, pick and place machines, sorting machines, or supervisory systems and control systems such as distributed control systems, supervisory and data acquisition (SCADA) systems, Programmable logic control (PLC) systems, robotic control systems. An asset may also refer to a part of a device or system, such as an electronic panel, a transformer, a drum, a filter, a generator, pump, a belt, a solar panel, a rotary feeder, a scale, a water jacket, a compressor, a gearbox, a car, a bearing, a lubrication system, asset exterior, a power supply, a clamping unit or any other component which commonly occurs as part of a device or system in an industrial setting.

Each asset in the collection 110 is monitored via the condition monitoring system. Data is obtained via monitored data streams from the assets 110. In some cases, a data stream may comprise time series data for a continuous variable measured via one or more sensors connected to the asset. Sensors may include: temperature, pressure, humidity, optical, motion sensors or any other types of sensor. Data may also be obtained from Internet of Things (IoT) devices such as smart devices or other remote monitoring systems. In some cases a data stream may represent a discrete variable such as a mode of operation of an asset, a program, a type of part being manufactured by an asset, or machine state data such as on/off.

Assets may be grouped together in fleets such as a fleet of solar panels. A fleet may comprise assets that are grouped based on attributes such as model, make, function or type. In some cases, fleets of assets are determined on the basis of a user-defined grouping. In some examples, assets may be related via a type of hierarchy. For example, a factory may comprise multiple production lines, where each production line comprises multiple assets or groups of assets.

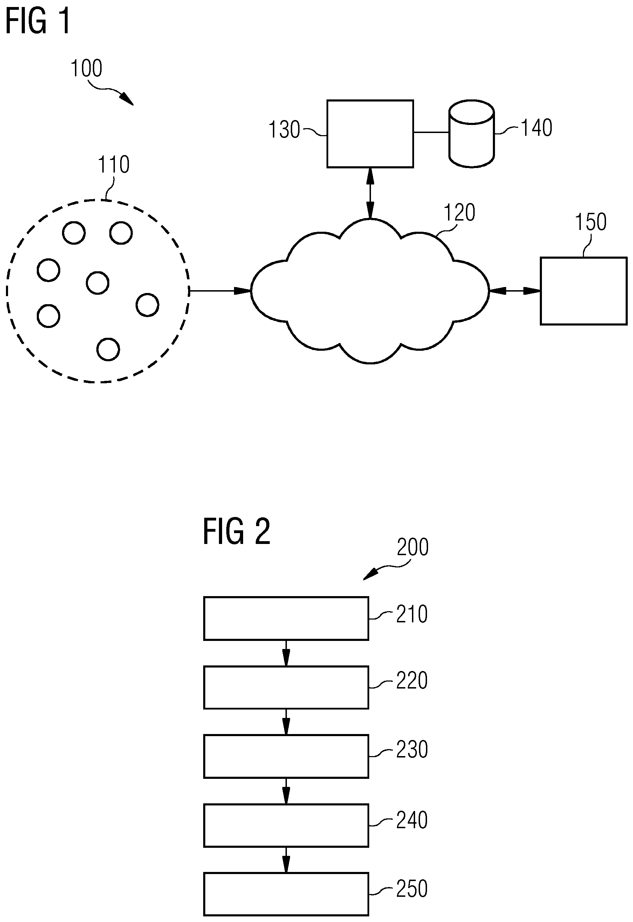

The data obtained from assets 110 may be communicated over local networks within, for example, an industrial environment, before being communicated over an external network 120. For example, data may be communicated locally over a Local Area Network (LAN), wireless sensor networks, industrial ethernet or Internet of Things (IoT) network, before being communicated to the external network 120, for example, via a server (not shown in Figure 1). The network 120 may be the internet, or another wide area network (WAN), wireless LAN, cellular network or any other kind of network.

In Figure 1, the collection of assets 110 is monitored remotely by a computing system 130, via network 120. The computing system 130 may comprise a network interface to facilitate communication via network 120 with the collection of assets I 10. Data may be received via network interface from the from monitored data streams associated with the assets 110. The computing system 130 may comprise one or more data processing units to process data received via the network interface and a memory to store instructions that may be implemented by the data processing unit to implement the methods described. Additionally, the computer system may implement various software modules or applications to achieve specific functionalities. These modules can be loaded and executed to provide data processing services, including but not limited to data analysis, machine learning, software management, and user interface generation. It should also be understood that the described embodiments may be realized using various types of hardware configurations. For example computing system 130 may instead comprise a distributed network of computing systems.

The computing system 130 is communicatively coupled to data storage 140. Data from monitored data streams and other information related to the assets 110 may be stored in the data storage 140 for subsequent use by the computing system 130. According to embodiments of the present disclosure, the computing system 130, in conjunction with data storage 140, stores metadata associated with monitored data streams. Although in Figure 1, computing system 130 and data storage 140 are shown as separate entities, in other embodiments data storage 140 may be integrated into computing system 130.

The metadata stored in data storage 140 and/or computing system 130, identifies functional dependencies between data streams. For example, in this scenario the existence of a functional dependency between vibration data recorded from a vibration sensor and line speed may be indicated via the metadata associated with the data streams. This metadata may be obtained from various sources including teams of experts, maintenance engineers, manufacturers, technical manuals or in an automated fashion using, for example, machine learning.

A terminal 150 connects with the computing system 130, via network 120. The terminal 150 may be a user device such as a desktop, laptop, tablet, smartphone, thin client or similar. In examples described herein the terminal 150 may communicate with the computing system 130 via e.g. a web-based application hosted remotely on the computing system 130 or via dedicated software on the terminal 150. The application may facilitate user interaction with the computing system 130 via a user interface. For example, the user may be able to review data from assets, review the results of data analysis, perform actions to interact with the computing system 130 and communicate with other devices.

Figure 2 shows a block diagram of a method 200, for identifying anomalies in data obtained by a condition monitoring system that monitors a plurality of data streams associated with an industrial asset, according to an example. Each data stream represents a condition of the asset such as an environmental or operational condition. The method 200 may be implemented on the condition monitoring system 100, for example, by computing system 130 and data storage 140.

At block 210, a first time series of data values is obtained from a first data stream in the plurality of monitored data streams over a specified time period. The specified time period may represent a window or aggregation period over which data has been received from the plurality of data streams. In some cases the data received over a data stream may correspond to raw sensor data. In other examples, the data is derived from sensor data. For example, in some cases, raw sensor data may be transformed using one or more data transformations.

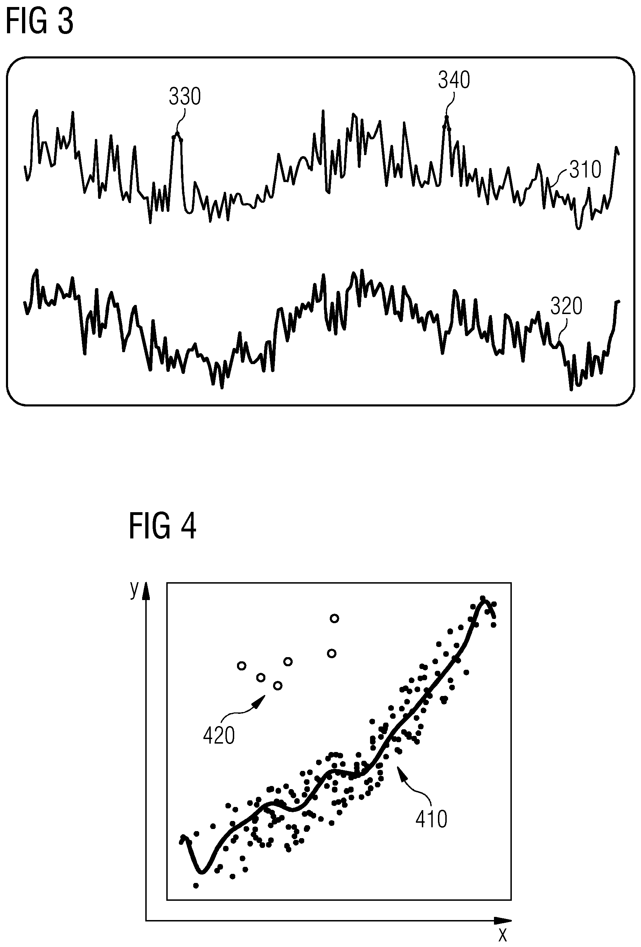

At block 220, functional dependencies between the first data stream and a subset of the plurality of data streams are identified from metadata. Figure 3 shows an example of functionally dependent data streams. In Figure 3 time series data from a first data stream 310 and a second data stream 320 are shown. The first and second data streams represent continuous parameters, for example, the first data stream 310 may correspond to vibrational data from a vibration sensor and the second data stream 320 may correspond to line speed. The time series data comprises a set of data points for each data stream, where each data point corresponds to, for example, a sensor reading at a point in time. As may be seen from Figure 3, the general behaviour of the first data stream 310 is to follow the oscillations of the second data stream 320. At some points in the first data stream 310, such as groups of points 330, 340, the first data stream 310 diverges from the second data stream 320.

At block 230, a model of the dependency between the first time series and time series data from the subset of data streams is generated. The model may be a machine learning regression model such as a Gaussian Process model. Gaussian Processes achieve good precision and speed, without the need for lengthy training. Gaussian Processes also perform well on sparse data sets, where there is little or no historical data. A Gaussian Process is defined with respect to a kernel function, which encodes assumptions about the function which the Gaussian Process is trying to learn. The Radial Basis Function (RBF) kernel may be used to model the relationship in the univariate case where a data stream which is functionally dependent on one other continuous data stream. In the more general case of a data stream which is dependent on multiple continuous data streams, the Matern kernel (a generalization of the RBF kernel) in combination with White Noise and Constant kernels, may be used.

Figure 4 shows a scatterplot of a Gaussian Process that models the dependency between the data streams 310, 320 shown in Figure 3. In Figure 4, the y-axis corresponds to the data values for the first data stream 310 and the x-axis corresponds to data values of the second data stream 320. Each point corresponds to a pair of values corresponding to the data values of the first and second data streams 310, 320 at a particular point in time. The Gaussian Process learns a curve 410 which closely tracks the relationship between the time series data for data streams 310, 320. In Figure 4 the data points 420, corresponding to the groups of points 330, 340, clearly stand out from the learned curve 410.

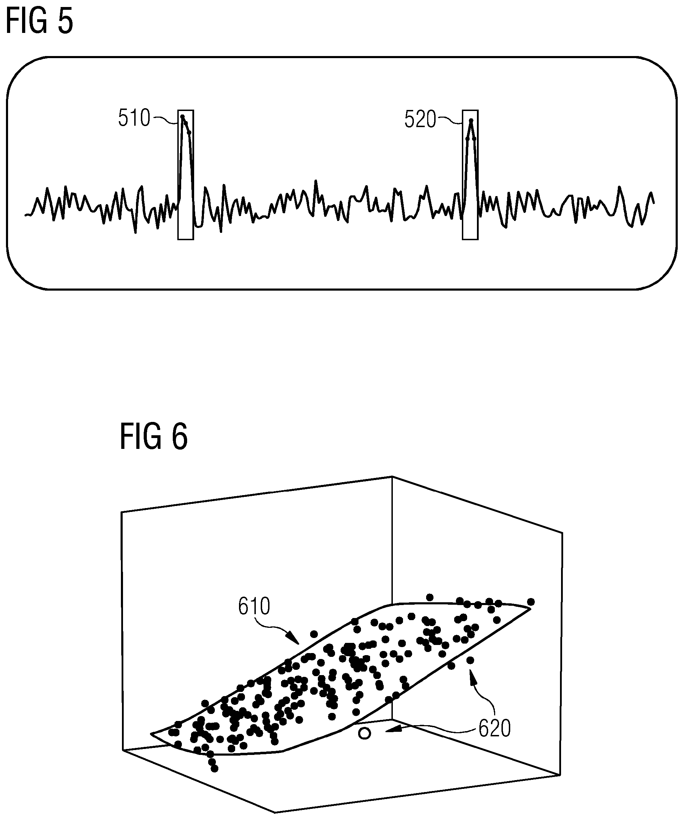

Referring to Figure 2, at block 240, a second time series of data values for the first data stream is generated based on the model and the first time series. According to an example, for each data point of the first time series, a new data value referred to herein as a residual value is determined. The residual value is defined as the vertical distance between the data point and the corresponding value for the Gaussian Process curve 410. Referring to the example shown in Figure 4, most of the data points have very small residual values, as they are tightly grouped around the curve 410. However, for the six outliers forming the group 420, the residual values are larger. The time series 500 of residual values is depicted in Figure 5.

At block 250 the anomalous data values are identified from the second time series. Referring to Figure 5, the six data points in groups 510, 520, corresponding to the groups 330, 340, which significantly deviate from the usual relationship corresponding to the curve 410, are readily identified from the time series 500. The time series 500 removes the oscillations driven by the time series 320 from the time series 310, so that data points with an anomalous relationship, such as points 510, 520, clearly stand out. In one embodiment one or more anomaly and trend detection methods such as threshold anomaly detection may be applied to the resulting time series to identify anomalies. The resulting time series may also be used in other analytics methods, such as failure matching to predict a time to failure.

Figure 6 shows a scatterplot of a Gaussian Process that models the dependency between a first data stream and two further data streams. In this example, the output of the Gaussian Process is a surface 610. Once again, the outlying data points 620 are clearly visible from the Gaussian Process model. Modelling dependency between a first data stream and more than two further data streams is impossible to display visually as the Gaussian Process model is a higher dimensional manifold. However this is very rarely required in practice: in the real world the dependency is almost always based on at most two further data streams. Furthermore, rather than trying to analyse all the time series together to identify relationships, the present method refers to the stored metadata which is already available to the system. Higher dimensional analysis is therefore avoided in almost all cases, mitigating issues which arise in multivariate analysis methods. However the methods described herein may also be applied in higher dimensions if necessary.

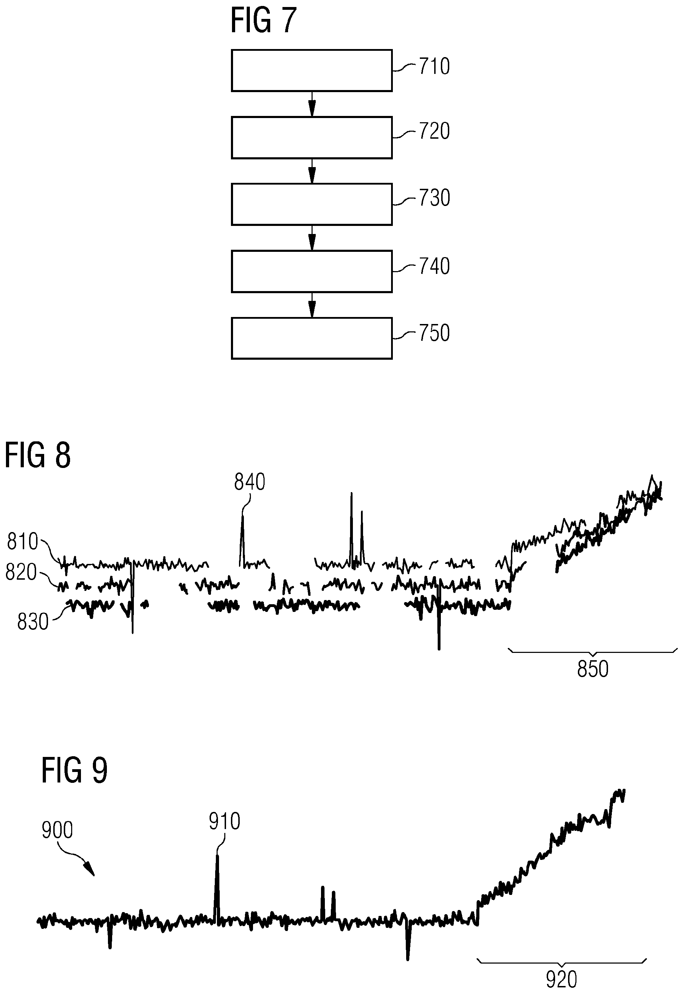

Figure 7 shows a block diagram of a method 700, for identifying anomalies in data obtained by a condition monitoring system that monitors a plurality of data streams associated with an industrial asset, according to an example. The method 700 may be implemented on the condition monitoring system 100, for example, by the computing system 130.

At block 710, time series data is obtained from a first data stream in the plurality of monitored data streams over a specified time period. Similar to the method 200, the specified time period may represent a window or aggregation period in which data is collected.

At block 720, a functional dependency between the first data stream and a second data stream in the plurality of data streams is identified, based on stored metadata. In method 700, the second data stream corresponds to a discrete parameter. Discrete parameters arise in many contexts. In manufacturing environments different modes or operational regimes of a machine may be represented by a discrete parameter. For example, for a machine such as a press, which uses different moulds to form parts in a casting process, a discrete parameter may be used to represent the different moulds used by the press.

At block 730 a set of normalised time series is determined from the time series data. The set of normalised time series comprises a normalised time series for each value of the discrete parameter. In one embodiment a set of normalised time series is determined by first obtaining a time series of data values for each value of the parameter, and subtracting the pseudo-median of each time series from itself.

Figure 8 shows time series data for different values of a discrete parameter. The values of the parameter may represent, for example, different operational regimes of an asset.

In Figure 8, there are three time series 810, 820, 830 corresponding to three values of a discrete parameter. On initial inspection, certain points such as point 840 appear to be anomalous spikes relative to the expected behaviour. There also appears to be an anomalous upward trend in the time segment 850. However, in general, there is no way of knowing whether trends, spikes or other changes in data are true anomalies or changes driven by changes in the value of the discrete parameter, without further context.

At block 740, a weighted average time series for the first data stream is determined based on the set of normalised time series. According to an example, the weighted average time series may be determined by determining the proportion of time over the specified time period that the discrete parameter attains each value and, subsequently, calculating a weighted average of the normalised time series, weighed by the time proportions. For example, where the discrete parameter represents different operational regimes, the weighting may be determined based on a regime calendar. The resulting time series is offset so that it coincides with the original time series data obtained from the first data stream. The method 700 effectively removes the expected variation caused by the changes in the values of the discrete parameter.

At block 750, anomalous data values are identified from the weighted average time series. In some embodiments, the anomalous data values are identified by applying one or more anomaly or trend detection methods to the weighted average time series.

Figure 9 shows an example of time series 900 obtained from the method 700. The time series 900, is a weighted average time series obtained from the time series 810, 820, 830 shown in Figure 8. The time series 900 reveals data anomalies such as point 910. Furthermore, the upward trend during time segment 920, appears to be externally driven rather than being driven by changes in the discrete parameter.

The method 700 may be extended to the case where the first data stream is dependent on a subset of data streams where each data stream in the subset represents a discrete parameter by re-expressing the discrete parameters as a single discrete parameter, for example, by combining the parameters.

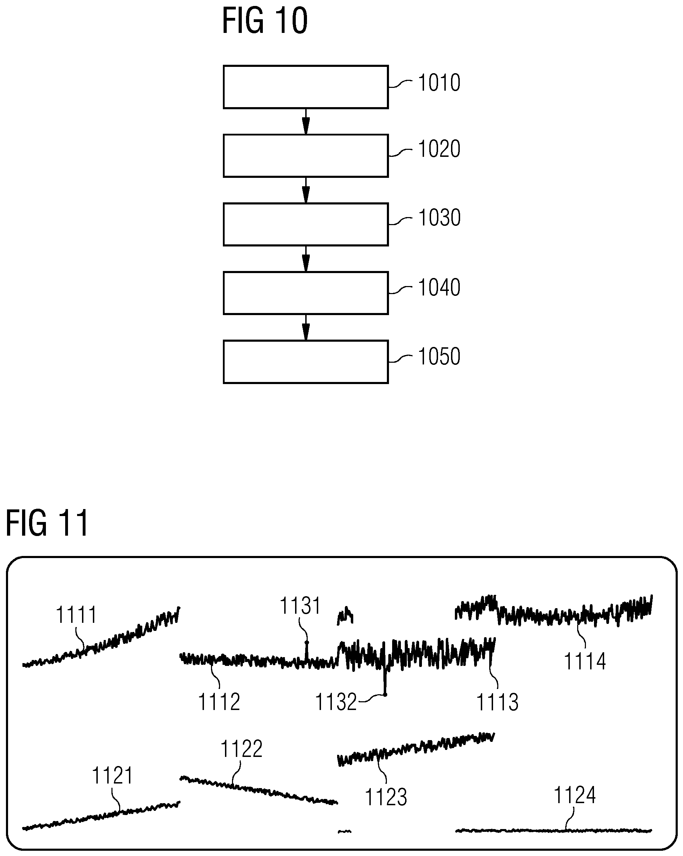

Figure 10 is a block diagram of a method 1000 for identifying data anomalies in data obtained by a condition monitoring system from a plurality of data streams. The method 1000 extends the method 200 previously described, to a general case of a data stream that is functionally dependent on a subset of data streams where the subset comprises at least one data stream representing a discrete parameter and at least one data stream representing a continuous parameter.

At block 1010, a first time series of data values is obtained from a first data stream in the plurality of data streams over a specified time period. At block 1020, a functional dependency between the first data stream and a subset of data streams is identified, where the subset comprises a data stream representing a discrete parameter and one or more data streams representing continuous parameters.

At block 1030, the first time series and time series data for each data stream in the subset representing a continuous parameter, are partitioned based on the values of the discrete parameter over the specified time period. Figure 11 shows an example of partitioned time series data. In Figure 11, the portions 1111, 1112, 1113, 1114, correspond to portions of the first time series for each value of a discrete parameter, and the portions 1121, 1122, 1123, 1124, correspond to portions of the time series data of a data stream representing a continuous parameter, for each value of the discrete parameter. Points 1131, 1132 appear to be anomalies.

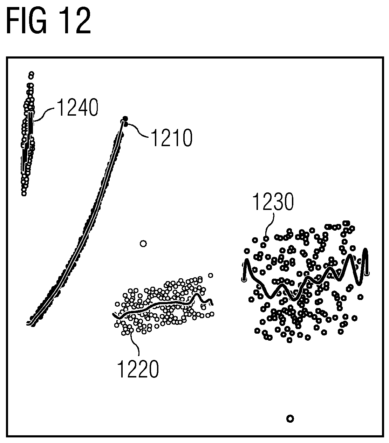

At block 1040, a model is generated for each value of the discrete parameter to model the dependency between the first time series and time series data for the one or more data stream representing the continuous parameters. Each of the models may be a regression model such as a Gaussian Process. Figure 12 shows examples of models for each value of the discrete parameter, for the time series data from Figure 11. Figure 12 shows a first Gaussian Process 1210 that models the dependency between portions 1111, 1121, a second Gaussian Process 1220, that models the dependency between portions 1112, 1122, a third Gaussian Process 1230, that models the dependency between portions 1113, 1123 and a fourth Gaussian Process 1240 that models the dependency between the portions 1114, 1124.

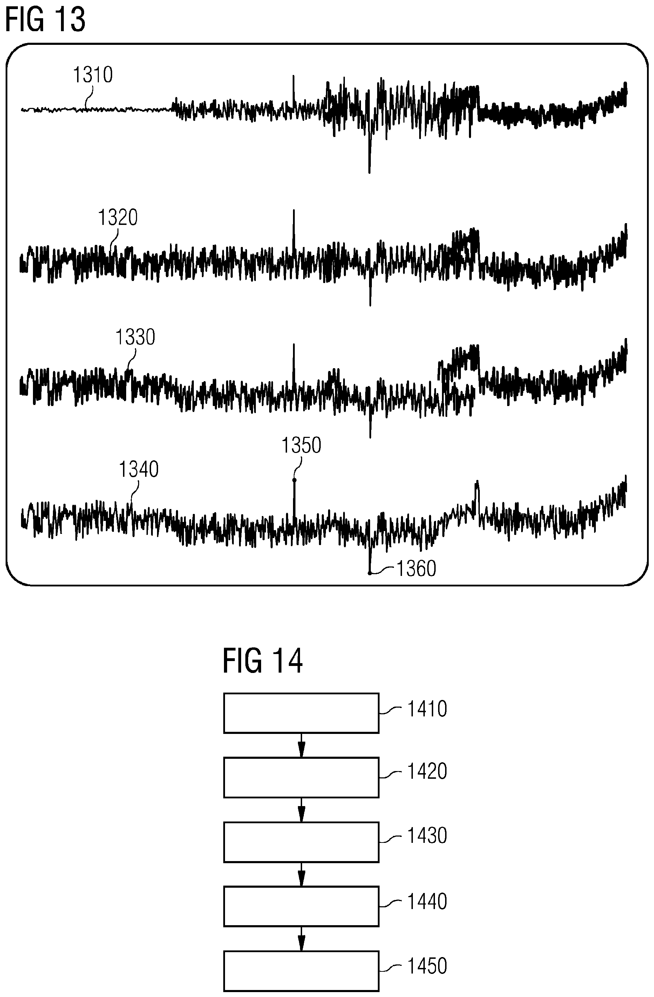

At block 1050, a second time series for the first data stream is generated. In one embodiment, the second time series may be generated as follows: for each generated model obtained at step 1040, an initial time series of residual values is calculated as the distance between the portion of the first time series and the model, in a similar fashion to the time series shown in Figure 5. Figure 13 shows an example 1310 of the resulting time series of residual values for the time series of Figure 11 and models from Figure 12.

Next, a noise level between the portions is normalised, resulting in a consistent noise level between the portions, as shown by the example 1320 in Figure 13. The noise may be estimated using a Bayesian model that splits a given time series into a varying trend and noise components. Formally, this model fits a 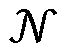 (0, σ) distribution to the de-trended time series, hence σ is a measure of the level of noise of the time series. Once σ has been inferred, the portion is normalised by dividing the time series by σ.

Each portion is offset in order that the portions match their baseline levels, which avoids spurious level changes where the discrete parameter changes value. The offset normalised portions are depicted as time series 1330 in Figure 13. A weighted average time series is obtained from each normalised offset portion, to produce a single, time series as depicted by the time series 1340 in Figure 13. The resulting time series enables clear identification of anomalous spikes at points 1350, 1360, while removing the effect of parameter driven oscillations.

Figure 14 shows a block diagram of a method 1400 for identifying anomalies in data obtained by a condition monitoring system from a fleet of industrial assets. The condition monitoring system is assumed to monitor a data stream for each asset, where the data stream represents a condition of the asset such as an operational or environmental condition.

The method 1400 may be used to identify anomalous behaviour by first removing the effect of the relative behaviour of the asset with respect to the average behaviour in the fleet. For example, a condition monitoring system may monitor a fleet of solar panels for power output, which is correlated with sunlight. However, some solar panels in the fleet may experience different but non-anomalous changes in power output during the day. For example, some solar panels may be concealed or partially concealed for part of the day, due to their position relative to an obstruction such as a tree or building. For those solar panels there is therefore an expected drop relative to the average behaviour of the fleet during those periods. The method 1400 may be used to remove the effect of this expected change to reveal the truly anomalous behaviours.

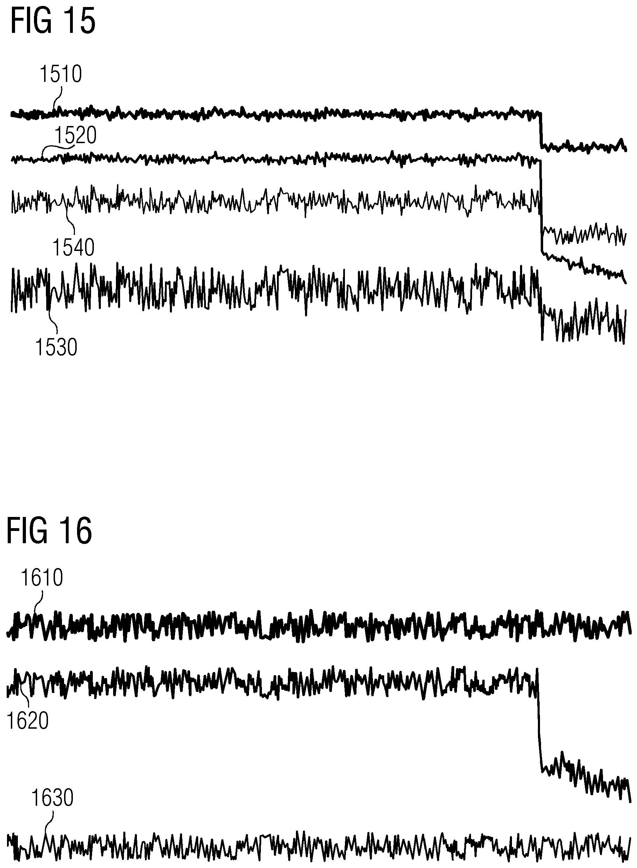

At block 1410, a first time series of data values for each asset in the fleet is obtained, over a specified time period from the data stream associated with the asset. Figure 15 shows time series data 1510, 1520, 1530, for three assets in a fleet. At block 1420, an average time series for the fleet is determined based on the first time series for each asset. The average time series may be determined by computing a measure of central tendency for the time series for each of the assets. The measure of central tendency used to compute the average time series may be a pseudo-median. The pseudo-median notably has high stability to outlying data values. In Figure 15, the time series 1540 represents the pseudo-median of time series 1510, 1520, 1530.

At block 1430, for a selected asset in the fleet, a model of the dependency between the first time series and the average time series is generated. The model may be a machine learning regression model such as a Gaussian Process model. At block 1440, a second time series for the selected asset is generated based on the model and the first time series. As in previous examples, the second time series may comprise a series of residual values determined as a distance between the first time series and the model, which is subsequently offset to coincide with the first time series. Figure 16 shows time series 1610, 1620, 1630 obtained from the time series 1510, 1520, 1530 by modelling the dependency between each of those time series and the average time series 1540.

At block 1450, anomalous data values are identified from the second time series. For example, anomalous values may be identified by identifying data values that lie outside a predefined threshold range of values. Referring again to Figure 16, even though all of the time series 1510, 1520, 1530 experience a drop at the end of the time segment, the time series 1620 is the only time series which still clearly shows a drop once the fleet dynamics have been taken into account, suggesting this drop is potentially anomalous and requires further investigation.

The individual methods presented herein are composable. For example, individual assets in a fleet may depend on other continuous or discrete parameters, and the methods may be used sequentially to produce a time series for each asset which clearly distinguishes anomalous behaviour from parameter driven changes. As mentioned previously, multivariate discrete parameters, such as a press that has different dies and which can work with different materials, may be condensed into a single parameter by combining the parameters. Finally, combinations of discrete and continuous parameters can also be accounted for using the methods described.

The methods described herein also produce time series which are suited to downstream data analysis operations. In particular, the time series have the same scale as the input time series. This allows users to adjust existing algorithms to achieve their desired settings, as the necessary adjustments often depend on the scale and baselines of the data, such as detect *upward trends that present at least a 25% increase per week.* This kind of setting can be applied directly to the time series data output by the present methods. Furthermore, data requirements are low and data analysis can begin with little historical data.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A computer-implemented method for identifying data anomalies in data obtained by a condition monitoring system from an industrial asset, wherein the condition monitoring system monitors a plurality of data streams associated with the industrial asset, wherein each data stream represents a condition of the asset and wherein the condition monitoring system stores metadata associated with the plurality of data streams, wherein the metadata identifies functional dependencies between the data streams, the method comprising:
obtaining a first time series of data values from a first data stream in the plurality of data streams over a specified time period;
identifying a functional dependency between the first data stream and a subset of the plurality of data streams, based on the stored metadata;
generating a model of the dependency between the first time series and time series data from the subset of data streams over the specified time period;
generating a second time series of data values for the first data stream based on the model and the first time series; and
identifying anomalous data values from the second time series.

2. The method of claim 1, wherein each data stream in the subset of data streams represents a continuous parameter.

3. The method of claim 2, wherein the model comprises a machine learning regression model.

4. The method of claim 3, wherein the regression model is a Gaussian Process.

5. The method of any one of claims 1 to 4, wherein generating the second time series comprises, for each data value of the first time series:
determining a distance between the data value and the model; and
offsetting the distance by a constant value to coincide with the first time series.

6. The method of any one of claims 1 to 5, wherein identifying the anomalous data values comprises identifying anomalous data values using one or more anomaly detection methods applied to the second time series.

7. The method of claim 1, wherein, when the subset comprises one or more data streams representing continuous parameters and a data stream representing a discrete parameter, generating the model comprises:
partitioning the first time series and the time series data for the one or more data streams representing continuous parameters, based on the values of the discrete parameter over the specified time period; and
generating a model for each value of the discrete parameter, based on the partitioning.

8. The method of claim 7, wherein generating the second time series for the first data stream comprises:
determining, for each regression model, an initial time series based on distances between values of the first time series and the model;
normalising a noise level with the initial time series;
determining a weighted average of the normalised initial time series; and
obtaining the second time series for the first data stream by offsetting the weighted average time series by a constant value to coincide with the first time series.

9. The method of claim 8, wherein normalising the noise level comprises:
estimating the noise level using a Bayesian model; and
normalising the noise level based on the estimated noise level.

10. The method of any of claims 1 to 9, wherein the condition is an operational condition or an environmental condition of the asset.

11. A computer-implemented method for identifying data anomalies in data obtained by a condition monitoring system from an industrial asset, wherein the condition monitoring system monitors a plurality of data streams associated with the industrial asset, wherein each data stream represents a condition of the asset and wherein the condition monitoring system stores metadata associated with the plurality of data streams, wherein the metadata identifies functional dependencies between the data streams, the method comprising:
obtaining time series data from a first data stream in the plurality of data streams over a specified time period;
identifying a functional dependency between the first data stream and a second data stream in the plurality of data streams, based on the stored metadata, wherein the second data stream represents a discrete parameter;
determining a set of normalised time series from the time series data, the set comprising a normalised time series for each value of the discrete parameter over the specified time period;
determining a weighted average time series for the first data stream, based on the set of normalised time series; and
identifying anomalous data values from the weighted average time series.

12. The method of claim 11, wherein determining the set of normalised time series comprises:
obtaining, from the time series data for the first data stream, a time series of data values for each value of the discrete parameter; and
for each obtained time series:
determining a value comprising a measure of central tendency for the time series;
subtracting the value from the time series to obtain a normalised time series.

13. A condition monitoring system comprising:
a data processing system to monitor a plurality of data streams associated with an industrial asset, wherein each data stream represents a condition of the asset; and
a data storage device coupled to the data processing system, to store metadata associated with the plurality of data streams, wherein the metadata identifies functional dependencies between the data streams;
wherein the data processing system is arranged to:
obtain a first time series of data values from a first data stream in the plurality of data streams over a specified time period;
identify a functional dependency between the first data stream and a subset of the plurality of data streams, based on the stored metadata;
generate a model of the dependency between the first time series and time series data from the subset of data streams over the specified time period;
generate a second time series of data values for the first data stream based on the model and the first time series; and
identify anomalous data values from the second time series.

14. The system of claim 13, wherein, when the subset comprises one or more data streams representing continuous parameters and a data stream representing a discrete parameter, to generate the model the data processing system is arranged to:
partition the first time series and the time series data for the one or more data streams representing continuous parameters, based on the values of the discrete parameter over the specified time period; and
generate a model for each value of the discrete parameter, based on the partition.

15. A condition monitoring system comprising:
a data processing system to monitor a plurality of data streams associated with an industrial asset, wherein each data stream represents a condition of the asset; and
a data storage device coupled to the data processing system, to store metadata associated with the plurality of data streams, wherein the metadata identifies functional dependencies between the data streams;
wherein the data processing system is arranged to:
obtain time series data from a first data stream in the plurality of data streams over a specified time period;
identify a functional dependency between the first data stream and a second data stream in the plurality of data streams, based on the stored metadata, wherein the second data stream represents a discrete parameter;
determine a set of normalised time series from the time series data, the set comprising a normalised time series for each value of the discrete parameter over the specified time period;
determine a weighted average time series for the first data stream, based on the set of normalised time series; and
identify anomalous data values from the weighted average time series.
